Europäisches Patentamt

European Patent Office

Office européen des brevets

(11) Veröffentlichungsnummer: **0 314 974**
**A2**

## (12) EUROPÄISCHE PATENTANMELDUNG

(21) Anmeldenummer: 88117282.9

(22) Anmeldetag: 18.10.88

(51) Int. Cl.⁴: **A23F 5/28 , A23F 5/20**

(30) Priorität: 02.11.87 DE 3737109

(43) Veröffentlichungstag der Anmeldung:
**10.05.89 Patentblatt 89/19**

(84) Benannte Vertragsstaaten:
**AT BE CH DE ES FR GB GR IT LI LU NL SE**

(71) Anmelder: **Jacobs Suchard AG**
**Seefeldquai 17**
**CH-8008 Zürich(CH)**

(72) Erfinder: **Schweinfurth, Hermann, Dipl.-Ing.**
**Dr.**
**Crüsemannallee 67**
**D-2800 Bremen 1(DE)**

(74) Vertreter: **Bolte, Erich, Dipl.-Ing. et al**
**c/o Meissner & Bolte Patentanwälte**
**Hollerallee 73**
**D-2800 Bremen 1(DE)**

(54) **Verfahren zur Konservierung von Rohkaffee-Extrakt.**

(57) Die vorliegende Erfindung betrifft ein Verfahren zur Konservierung von Rohkaffee-Extrakt, wobei ein trockenes Konzentrat des Rohkaffee-Extraktes hergestellt wird, in dem der Rohkaffee-Extrakt in einer ersten Verfahrensstufe auf 30 bis 40 g Trockensubstanz/100 ml Extrakt konzentriert wird und anschließend in einer weiteren Verfahrensstufe zum Trocknen gebracht wird, und wobei die Lagerung des trockenen Konzentrats unter Ausschluß von Sauerstoff und Wasser erfolgt.

EP 0 314 974 A2

## Verfahren zur Konservierung von Rohkaffee-Extrakt

Die Erfindung betrifft ein Verfahren zur Konservierung von Rohkaffee-Extrakt.

Rohkaffee-Extrakt ist ein wichtiges Zwischenprodukt bei der Herstellung spezieller Kaffee-Zubereitungen.

Aus der EP-B-0008398 ist ein Verfahren zum Entcoffeinieren von Kaffee bekannt, bei dem aus Rohkaffee Coffein mit einer wäßrigen coffeinfreien Rohkaffee-Extraktlösung (Gleichgewichtslösung) extrahiert wird. Die mit Coffein angereicherte Gleichgewichtslösung (Rohkaffee-Extrakt) wird durch einen vorbeladenen Aktivkohle-Adsorber geführt, wobei das Coffein selektiv adsorbiert wird. Die so entcoffeinierten Bohnen müssen anschließend nur noch getrocknet werden.

Der in EP-B-0008398 verwendete coffeinfreie Rohkaffeebohnen-Extrakt enthält Kaffeeinhaltsstoffe - außer Coffein - in derartigen Konzentrationen, daß aus den Kaffeebohnen außer Coffein nichts herausgelöst wird, da die Konzentrationen in einer wäßrigen Lösung mit den Konzentrationen in der Kaffeebohne im Gleichgewicht stehen.

Coffeinhaltiger wie entcoffeinierter Rohkaffee-Extrakt sollen im folgenden unter Rohkaffee-Extrakt bzw. Gleichgewichtslösung verstanden werden.

Im genannten kontinuierlichen Entcoffeinierungsverfahren nach EP-B-0008398 wird der Rohkaffee-Extrakt ständig bei ca. 80° C im Prozeß benutzt. Die Temperatur von ca. 80° C ist aus zwei Gründen erforderlich:

1. sie ermöglicht eine erheblich beschleunigte Coffeindiffusion, und

2. sie verhindert den mikrobiologischen Verderb der Lösung.

Bei Temperaturen unter ca. 60° C kann es zu raschem Keimwachstum in der Lösung kommen (Fermentation). Die Inhaltsstoffe der Lösung werden verändert und es kommt zu einer negativen Geschmacksbeeinträchtigung des damit behandelten Kaffees. In diesem Fall muß die verdorbene Gleichgewichtslösung verworfen und eine neue hergestellt werden. Außer erheblichen Zeitverlusten stellt auch der Wertverlust durch die verworfene Extraktlösung einen erheblichen Kostenfaktor dar.

Bei längeren Betriebsunterbrechungen muß deshalb die Gleichgewichtslösung in speziellen Behältern bei einer konstanten Temperatur von ca. 80° C gehalten werden. Verdunstungsverluste an Wasser sind ständig auszugleichen. Diese Art der Aufbewahrung ist sehr energieaufwendig und störanfällig. Schwankungen in der Temperatur und Konzentration des Extraktes können zu nachteiligen Veränderungen im Aroma des Rohkaffeextraktes und des mit dem Extrakt behandelten Kaffees führen.

Aufgabe der vorliegenden Erfindung ist es nun, ein Verfahren zur Konservierung von Rohkaffee-Extrakt bereitzustellen, das eine Aufbewahrung des Rohkaffee-Extraktes ohne nachteilige Beeinträchtigung der organoleptischen Eigenschaften des Rohkaffee-Extraktes erlaubt.

Diese Aufgabe wird in überraschend einfacher Weise durch die kennzeichnenden Merkmale des Patentanspruches 1 gelöst.

Es hat sich gezeigt, daß die Herstellung eines trockenen Konzentrates aus Rohkaffee-Extrakt in zwei hintereinander geschalteten Trocknungsstufen sehr vorteilhaft ist. Das trockene Konzentrat des Rohkaffee-Extraktes kann in luft-und wasserdampfdichten Behältern über einen Zeitraum von zwei Jahren gelagert werden, ohne daß bemerkenswerte Veränderungen der Kaffeeinhaltsstoffe auftreten.

Vorzugsweise wird die erste Verfahrensstufe in einem Fallstromverdampfer bei Temperaturen von 80° C bis 50° C durchgeführt.

Für die Ausführung der folgenden Verfahrensstufe eignen sich unterschiedliche Trocknungsvorrichtungen, wie z. B. Sprühtrockner oder Gefriertrocknungs-Anlagen.

Im Sprühtrockner wird der konzentrierte Rohkaffee-Extrakt, z. B. mit Hilfe von Druckdüsen, versprüht und mit trockener Luft von ca. 210° C bis 250° C im Gleichstrom getrocknet.

In Gefriertrockner-Anlagen erfolgt die Trocknung des konzentrierten Rohkaffee-Extraktes nach dem Tiefgefrieren. Der tiefgefrorene konzentrierte Rohkaffee-Extrakt (ca. -40° C) wird in einem Vakuum von 0,5 mbar unter Wärmezufuhr (40° C bis 90° C) durch Sublimation des Wassers getrocknet. Der Rest-Feuchtigkeitsgehalt des trockenen Konzentrates liegt bevorzugt unter 4 Gew.-%.

Als vorteilhaft für die Erhaltung der Qualität des trockenen Konzentrats hat sich seine Aufbewahrung in Innertgas-Atmosphäre erwiesen.

Wird nun ein neuer wäßriger Rohkaffee-Extrakt (Gleichgewichtslösung) benötigt, z. B. beim erneuten Anfahren der Entcoffeinierungsanlage, so gibt man die der gewünschten Konzentration entsprechende Menge an trockenem Konzentrat in einen Rührbehälter mit Wasser von ca. 80° C. Innerhalb von wenigen Minuten erhält man dann den gewünschten Extrakt und kann damit die Anlage anfahren, ohne daß zusätzliche Feststoffverluste in den Rohkaffeebohnen entstehen.

Die Gewinnung von wäßrigem Rohkaffee-Extrakt, der nach dem erfindungsgemäßen Verfahren konserviert werden kann, erfolgt z. B. dadurch, daß man vorgequollene Rohkaffeebohnen (ca. 55% Wassergehalt) in eine bestimmte Menge Wasser gibt. Durch Diffusion von wasserlöslichen Rohkaffeebestandteilen aus den Bohnen reichert sich das Wasser mit diesen an. Entfernt man die Rohkaffeebohnen, wenn die Konzentration an Kaffeeinhaltsstoffen in der wäßrigen Lösung konstant bleibt und bringt anschließend erneut vorgequollene Rohkaffeebohnen ein, so kann diese Konzentration weiter gesteigert werden. Wiederholt man diese Verfahrensweise mehrmals, so erhält man schließlich eine wäßrige Lösung, bei der sich die Konzentration an Kaffeeinhaltsstoffen praktisch nicht mehr verändern läßt. Diese Lösung steht im Diffusions-Gleichgewicht mit der Lösung innerhalb der vorgequollenen Rohkaffeebohnen. Die Konzentration an wasserlöslichen Rohkaffeebestandteilen liegt dann zwischen 16 und 22 g/100 ml Lösung.

Diesem Rohkaffee-Extrakt (Gleichgewichtslösung) kann mit Hilfe von z. B. vorbeladener Aktivkohle selektiv Coffein entzogen werden.

Nachstehend wird das erfindungsgemäße Verfahren anhand eines Beispiels näher erleutert:

Beispiel

a) Herstellung eines trockenen Konzentrates von Rohkaffee-Extrakt:
Es wurden 10 kg Columbia-Rohkaffee im Technikumsmaßstab zwei mal mit insgesamt je 50 Liter Wasser bei 85° C bis 90° C extrahiert.
Die vereinigten Extrakte wurden auf einen Trockensubstanzgehalt von ca. 30% konzentriert (Zentri-Term, CT 1 B, Firma Alfa Laval). Anschließend wurde der Extrakt in Gefrierschalen auf -33° C bis -35° C vorgefroren.
Mittels Trockeneis wurde die Temperatur auf -60° C gebracht und der nunmehr feste Extrakt in einer gekühlten Eisraummühle vermahlen. Das Mahlgut wurde im Gefriertrockner (G 06, Firma LEYBOLD-HERAEUS) während 15 Stunden getrocknet. Es wurde ein trockenes Konzentrat mit einem Feuchtigkeitsgehalt von ca. 3% erhalten.
b) Rohkaffee-Behandlung:
100 g Columbia-Rohkaffee wurden mit 100 ml Wasser versetzt und während 90 Minuten bei 90° C (T-Bad) am Rotationsverdampfer gequollen.
Der gequollene Rohkaffee wurde in eine Umlaufapparatur, bestehend aus einem trichterförmigen Extraktionsgefäß mit Mantelheizung und eingebauter Schlitzfritte, einer Umwälzpumpe und einem Thermostaten eingefüllt.
Aus 40,0 g trockenem Konzentrat, hergestellt nach a), und 176 ml Wasser wurden 200 ml Rohkaffee-Extrakt hergestellt. Die Lösung wurde ebenfalls in die vorerwärmte Umlaufapparatur eingefüllt und während 6 Stunden bei 80° C umgepumpt. Anschließend wurde der Extrakt abgelassen und der behandelte Rohkaffee während 50 Minuten auf seinen ursprünglichen Feuchtigkeitsgehalt zurückgetrocknet.
Zusätzlich wurden 100 g Columbia-Rohkaffee bei 90° C während 90 Minuten mit 100 ml gequollen und ohne weitere Behandlung sogleich zurückgetrocknet.
Behandelter Rohkaffee sowie unbehandelter Columbia-Rohkaffee wurden in der Wirbelschicht geröstet (360° C; 90 Sekunden).
c) Verkostung und Ergebnis:
Die gerösteten Proben wurden vermahlen. Es wurde aufgebrüht und die Proben in Reihe verkostet. Es konnten keine signifikanten Unterschiede in der sensorischen Beurteilung zwischen den Proben, die aus nur mit Wasser vorgequollenem Rohkaffee hergestellt worden waren und den Proben, die aus Rohkaffee hergestellt worden waren, der mit Extraktlösung aus trockenem Konzentrat vorbehandelt war, festgestellt werden.

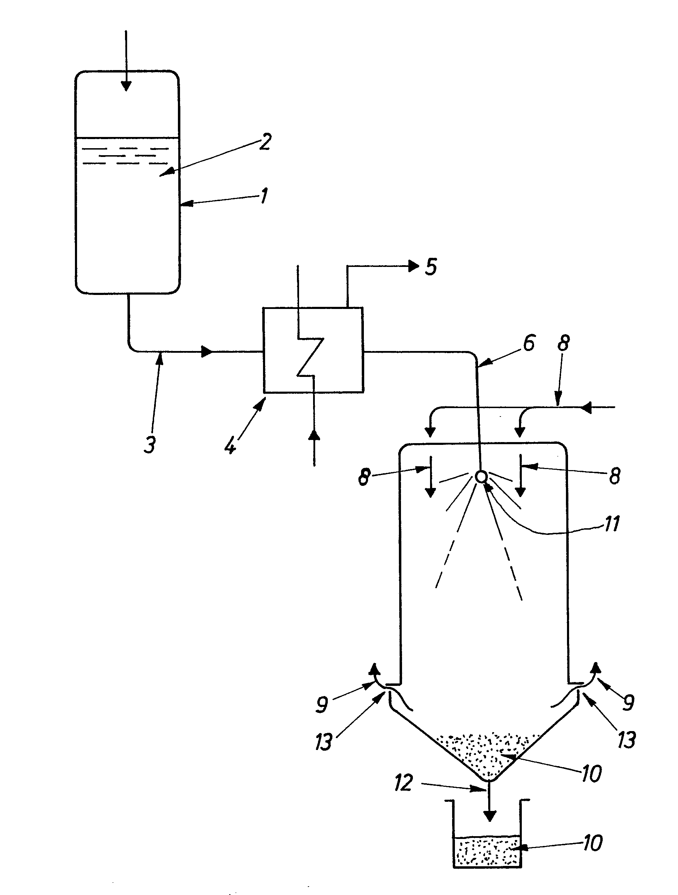

Unter Bezugnahme auf die beigefügte Zeichnung werden Einzelheiten des erfindungsgemäßen Verfahrens zur Konservierung von Rohkaffee-Extrakt beispielsweise beschrieben:
Der wäßrige Rohkaffee-Extrakt 2 wird aus einem Vorratstank 1 durch eine Leitung 3 zu einem Fallstromverdampfer 4 transportiert. Im Verdampfer 4 wird Wasser aus dem Rohkaffee-Extrakt durch Wärmezufuhr in den gasförmigen Zustand übergeführt und als Wasserdampf 5 abgeleitet. Der wäßrige Rohkaffee-Extrakt wird in diese Stufe auf 30 bis 40 g Trockensubstanz/100 ml Extrakt konzentriert. Der Fallstromverdampfer steht über eine Leitung 6 mit einem Sprühtrockner 7 in Verbindung. Die Leitung 6 führt in das Innere des Sprühtrockners und endet dort in einer Sprühvorrichtung 11. Durch diese Leitung 6 wird der konzentrierte Rohkaffee-Extrakt zur zweiten Verfahrensstufe transportiert. Die Sprühvorrichtung 11 kann z. B. zum Zerstäuben des Trocknungsgutes eine Düse oder eine Zerstäubungsscheibe aufweisen. Sie ist im oberen Bereich des Sprühtrockner-Innenraumes angeordnet und erlaubt ein Zerstäuben oder Vernebeln des Extraktes. Dem zerstäubten oder vernebelten Extrakt wird durch heiße trockene Luftströme 8 mit einer Temperatur von 210° C bis 250° C, die im oberen Bereich des Sprühtrockners eingeleitet werden, im Gleichstrom das Wasser entzogen. Die mit Wasserdampf angereicherte Luft entweicht an speziellen Auslaß-Öffnungen im unteren Teil des Sprühtrockners. Das sprühgetrocknete Konzentrat kann am Boden des Sprühtrockners durch eine Öffnung 12 entnommen werden.

## Ansprüche

1. Verfahren zur Konservierung von Rohkaffee-Extrakt **gekennzeichnet durch** die Herstellung eines trockenen Konzentrats von Rohkaffee-Extrakt, wobei der Rohkaffee-Extrakt in einer ersten Verfahrensstufe auf 30 bis 40 gr Trockensubstanz/100 ml Extrakt konzentriert wird und anschließend in einer weiteren Verfahrensstufe zur Trockene gebracht wird, und Lagerung des trockenen Konzentrats unter Ausschluß von Sauerstoff und Wasser.

2. Verfahren nach Anspruch 1, dadurch gekennzeichnet, daß das trockene Konzentrat einen Feuchtigkeitsgehalt von weniger als 4 Gew.-% aufweist.

3. Verfahren nach Anspruch 1 oder 2, dadurch gekennzeichnet, daß die erste Verfahrensstufe in einem Fallstromverdampfer bei Temperaturen von 80°C bis 50°C durchgeführt wird.

4. Verfahren nach einem oder mehreren der Ansprüche 1 bis 3, dadurch gekennzeichnet, daß die zweite Verfahrensstufe unter Verwendung eines Sprühtrockners oder einer Gefriertrocknungs-Anlage durchgeführt wird.

5. Verfahren nach einem oder mehreren der Ansprüche 1 bis 4, dadurch gekennzeichnet, daß das trockene Konzentrat in Innertgas-Atmosphäre gelagert wird.